# EUROPÄISCHE PATENTSCHRIFT

(11) **EP 3 865 717 B1**
(45) Veröffentlichungstag und Bekanntmachung des Hinweises auf die Patenterteilung: **29.11.2023**
(21) Anmeldenummer: 20157395.3
(22) Anmeldetag: 14.02.2020
(51) Int. Cl.: F16B 7/14, F16B 7/18, F16B 7/06, F16B 7/04, F16B 13/12, F16B 37/08

(54) **TELESKOPSTREBE**
TELESCOPIC STRUT
MONTANT TÉLESCOPIQUE

(43) Veröffentlichungstag der Anmeldung: 18.08.2021
(73) Patentinhaber: on.gmbh, 88525 Heudorf (DE)
(72) Erfinder: Brobeil, Volker, 88525 Dirmentingen (DE)
(74) Vertreter: Baur & Weber Patentanwälte PartG mbB

(56) Entgegenhaltungen:
- EP-A2- 1 588 975
- DE-U1-202016 105 492
- DE-U1-202018 101 662
- DE-U1-202019 100 026
- US-A- 4 856 929

## Beschreibung

Die Erfindung betrifft eine Teleskopstrebe.

Aus dem allgemeinen Stand der Technik ist es bekannt, Bauteile, an denen spanende Bearbeitungsschritte vorgenommen werden sollen, zur Reduzierung von Schwingungen mit einer temporär angeschweißten Metallstrebe zu versteifen. Die Metallstrebe wird dabei an ihren gegenüberliegenden Endseiten am zu bearbeitenden Bauteil mittels einer Schweißnaht oder mehrerer Schweißpunkte befestigt. Vor allem bei gitterartigen Bauteilen oder solchen mit abstehenden und daher leicht in Schwingungen geratenden Teilen werden derartigen Streben temporär angeschweißt. Das Anbringen einer temporären Strebe ist jedoch mit einem zusätzlichen Arbeitsaufwand verbunden. Zudem muss die Strebe nach der Bearbeitung des Bauteils wieder entfernt werden, was abgesehen von dem entstehenden weiteren Arbeitsaufwand, häufig nicht rückstandsfrei gelingt. Ein weiteres Problem der temporär angeschweißten Strebe besteht darin, dass sich das Bauteil nach dem Entfernen der Strebe verzieht. Neben der Aussteifung bei der spanenden Bearbeitung werden angeschweißten Streben auch zur Lagefixierung mehrerer Bauteile eingesetzt.

Des Weiteren sind zur Lagefixierung von Bauteilen aus dem Stand der Technik bereits unterschiedliche Lösungen bekannt.

Aus der DE 20 2016 105 492 U1 ist ein Hilfsmittel für die Montage eines Möbelstücks bekannt, bei dem an gegenüberliegenden Enden einer Teleskopstange Fixiermittel angeordnet sind, mit denen zwei Bauteile bezüglich ihrer Lage aufeinander ausgerichtet werden können.

Aus der DE 41 23 329 ist eine Vorrichtung für die Montage einer Türzarge in einer Wandöffnung bekannt, bei der zwei gegenüberliegende Anlageflächen über eine Teleskopstrebe beabstandet werden.

Die DE 20 2006 001 187 U1 gibt eine Teleskopstange an, die zwischen zwei Anlageflächen mittels eines Ratschenmechanismus ausgefahren werden kann, um die Strebe zwischen den beiden Anlageflächen zu verspannen.

Die DE 20 2011 051 436 U1 gibt eine Montagestütze an, die zwischen zwei Anlageflächen verspannt werden kann und zur Einstellung der Länge Positionierausnehmungen aufweist, in die eine Fixierklinke eingreifen kann.

Aus der DE 20 2006 015 091 U1 ist eine Teleskopstange bekannt, die zwischen einem Außenrohr und einem Innenrohr eine Feder aufweist, mittels der die Teleskopstange zwischen zwei Anlageflächen verspannt werden kann.

Die EP 1 588 975 A2 zeigt ein Abhängeelement mit zwei Befestigungselementen an den Enden eines rohrförmigen Mittelelements, wobei die zwei Befestigungselemente zusammenwirkend mit dem Mittelelement wie bei einem Spannschloss längenverstellbar sind. Eine unbeabsichtigte Längenverstellung wird durch zwei ineinander verzahnte Scheiben im inneren Endbereich des Mittelelements verhindert, von denen eine an einem Schaft befestigt ist, der im rohrförmigen Mittelelement positioniert ist.

Die US 4,856,929 zeigt eine Teleskopstange mit einem Spreizdübel zur Verriegelung.

Die DE 20 2016 105 492 U1 zeigt ein Hilfsmittel für die Montage von Möbelstücken mit einer längenverstellbaren Stange, an deren Enden verstellbare Fixiermittel angeordnet sind.

Die DE 20 2019 100 026 U1 zeigt eine Rohrklemme mit einem Spannelement. Die DE 20 1018 101 662 U1 zeigt eine Stange mit zwei Befestigungselementen an den Enden, die zusammenwirkend mit der Stange wie bei einem Spannschloss längenverstellbar sind.

Die bekannten Teleskopstreben zur Verspannung zwischen ihren beiden Enden sowie zur relativen Lagerung zweier Bauteile üben entweder eine nach außen in Richtung der beiden Enden wirkende Druckkraft oder eine nach innen gerichtete Zugkraft aus.

Vor diesem Hintergrund hat sich der Erfinder die Aufgabe gestellt, eine Vorrichtung zur einfachen temporären Aussteifung und Lagefixierung von Bauteilen anzugeben.

Diese Aufgabe wird durch den unabhängigen Patentanspruch 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung charakterisiert und spezifiziert die Erfindung zusätzlich.

Gemäß der Erfindung wird eine Teleskopstrebe angegeben, die ein Außenrohr und ein in das Außenrohr eingeführtes und relativ zum Außenrohr längsverschiebbares Innenrohr umfasst, das an einem Ende mittels eines Spreizdübels im Außenrohr verriegelbar ist, wobei an gegenüberliegenden Endseiten der Teleskopstrebe jeweils ein Verbindungsmittel und jeweils ein Fixiermittel angeordnet ist, wobei die Fixiermittel mit den Verbindungsmitteln an Gewindeverbindungen miteinander verschraubbar sind, und wobei die Gewindeverbindungen zwischen den Verbindungsmitteln und den Fixiermitteln auf den gegenüberliegenden Endseiten der Teleskopstrebe gegenläufige Gewindegänge aufweisen, so dass die Verbindungsmittel und die Fixiermittel beim Drehen des mit dem Außenrohr verriegelten Innenrohres um eine Drehachse der Teleskopstrebe wie ein Spannschloss zusammenwirken, wobei die Verbindungsmittel an der Endseite des Außenrohrs und an der Endseite des Innenrohrs vorgesehen sind.

Demnach weist die erfindungsgemäße Teleskopstrebe zwei voneinander unabhängige Längenverstellmöglichkeiten auf. Die erste Längenverstellmöglichkeit wird durch das innerhalb des Außenrohres längenverschiebbare Innenrohr geschaffen, das mittels eines Spreizdübels im Außenrohr fixiert werden kann. Mit dieser ersten Längenverstellmöglichkeit kann die Länge der Teleskopstrebe grob eingestellt werden, so dass der Abstand zwischen den beiden Punkten, an denen die Teleskopstrebe mittels der Fixiermittel fixiert wird, veränderbar ist. Bei der zweiten Längenverstellmöglichkeit handelt es sich um zwei wie ein Spannschloss zusammenwirkende Verbindungsmittel, die auf den gegenüberliegenden Enden der Teleskopstrebe angeordnet sind. Ähnlich zu einem Spannschloss weisen die beiden Verbindungsmittel zwei gegenläufige Gewinde auf, in die jeweils korrespondierende Gewinde der Fixiermittel eingreifen, sodass eine Drehung des Spannschlosses um seine Längsachse zu einer Längenveränderung führt. Die beiden Verbindungsmittel sind dabei an den Endseiten in das jeweilige Rohr eingeführt und dort verdrehsicher mit dem Rohr gefügt.

Die Fixiermittel weisen vorteilhafterweise eine Außengewinde in Form eines einen gewindestiftartigen Fortsatzes auf, um die Fixiermittel in die Innengewinde der Verbindungsmittel einschrauben zu können.

Die beiden Verbindungsmittel auf den gegenüberliegenden Enden der Teleskopstrebe weisen ein Linksgewinde und ein Rechtsgewinde auf, sodass ein Drehen des Innenrohres und des Außenrohres in gleichem Drehsinn zu einer Längenveränderung über die Verbindungsmittel führt. Die Fixiermittel sind in das Verbindungsmittel eingeschraubt und korrespondieren daher bezüglich ihres Gewindeganges mit dem jeweiligen Verbindungsmittel.

Der Spreizdübel sitzt auf dem zum Außenrohr weisenden Ende des Innenrohres, wobei eine an diesem Ende angeordnete Gewindestange den Spreizdübel beim Drehen des Innenrohres gegenüber dem Außenrohr spreizt. Der Spreizdübel weist hierfür ein entlang seiner Mittelachse konisch zulaufendes Innengewinde auf.

Zur Anordnung der Teleskopstrebe zwischen zwei Punkten wird der Spreizdübel geöffnet, so dass das Innenrohr in Längsrichtung innerhalb des Außenrohres verschoben werden kann. Anschließend wird das Fixiermittel auf einer Endseite der Teleskopstrebe mit einem zu verbindenden Punkt am Bauteil verbunden. Danach wird die Teleskopstrebe durch Längsverschiebung des Innenrohres gegenüber dem Außenrohr soweit verlängert oder verkürzt, bis das zweite noch freie Fixiermittel am zweiten Punkt befestigt werden kann. Nun wird das Innenrohr gegenüber dem Außenrohr verdreht bis der Spreizdübel auf der Innenseite des Außenrohres kraftschlüssig anliegt und das Innenrohr gegenüber dem Außenrohr fixiert ist. Durch gemeinsames drehrichtungsgleiches Drehen des Außenrohres und des Innenrohres kann nun die Länge der Teleskopstrebe zwischen den beiden Punkten variiert werden. Demnach kann die Teleskopstrebe zum Ausüben eines Drucks oder einer Spannung zwischen den beiden Punkten angeordnet werden, wobei sie mittels der Feineinstellung der Länge durch die Verbindungsmittel auch neutral eingestellt werden kann, um weder Spannung noch Druck auszuüben.

Die so zusammenwirkenden Verbindungsmittel haben den Vorteil, dass die Länge der Teleskopstrebe präzise eingestellt werden kann, insbesondere im Vergleich zu einer reinen Längsverlagerung des Innenrohres im Außenrohr. Eine gewünschte Druckkraft beziehungsweise Zugkraft zwischen den beiden Enden, an denen die Teleskopstrebe fixiert ist, kann somit präzise eingestellt werden. Gleichfalls kann aber auch erreicht werden, dass die Teleskopstrebe zwischen den beiden Punkten weder eine Zugkraft noch eine Druckkraft ausübt, sodass nach dem Bearbeiten des Bauteils, an welchem die Teleskopstrebe angeordnet ist, ein Nachfedern oder Verziehen des Bauteils vermieden wird.

Die Teleskopstrebe wird mit Fixierflächen der Fixiermittel an den beiden Befestigungspunkten befestigt und nicht, wie beispielsweise eine federgespannte Teleskopstrebe, zwischen den Endpunkten eingeklemmt, was die kraftfreie Anordnung ermöglicht.

Eine Gewindeverbindung wird durch ein Innengewinde, das vorteilhafterweise in einem Verbindungsmittel ausgebildet ist, und ein Außengewinde gebildet, das vorteilhafter Weise an einem Fortsatz des Fixiermittels ausgebildet ist.

Gemäß einer Ausführungsform der Erfindung ist das Innenrohr zumindest abschnittsweise mit einem schwingungsdämpfenden Material gefüllt.

Ein massereiches Material, wie beispielsweise Beton oder Metallkugeln, vergrößert die Masse des Innenrohres, was sich schwingungsdämpfend auswirkt. Das Innenrohr kann vollständig oder teilweise mit dem kompakten oder körnigen Material befüllt sein. Besonders vorteilhaft ist die Verwendung eines Betons, da das am Innenrohr angeordnete Verbindungsmittel sowie der mit dem Spreizdübel korrespondierende Gewindestift dann gleichzeitig an einer Stirnseite des Innenrohres über den Beton befestigt werden kann.

Gemäß einer weiteren Ausführungsform der Erfindung ist das Außenrohr zumindest abschnittsweise mit einem schwingungsdämpfenden Material gefüllt.

Bei dem Material handelt es sich, wie auch beim Innenrohr, um eines mit einer großen Masse. Da das Innenrohr längsverschiebbar im Außenrohr geführt ist, kann je nach gewünschtem Umfang der Verstellbarkeit die Befüllung des Außenrohrs nur abschnittsweise vorgenommen werden.

Gemäß einer weiteren Ausführungsform der Erfindung sind die Gewindeverbindungen als Feingewinde ausgebildet.

Mittels Feingewinden, die eine niedrigere Steigung als Regelgewinde aufweisen, kann die Länge der Teleskopstrebe und somit auch die Druck- oder Zugkraft präziser eingestellt werden. Gleichzeitig weisen Feingewinde eine größere Selbsthemmung auf, sodass eine Veränderung der Länge weitestgehend ausgeschlossen werden kann, beziehungsweise auf Feststellmittel, wie im weiter unten noch erläutert, verzichtet werden kann.

Das verwendete Gewindeprofil kann vorteilhafterweise so ausgewählt werden, dass Spiel zwischen den einzelnen Komponenten entlang der Längsachse der Teleskopstrebe möglichst minimiert ist. So sollte das Fixiermittel im eingeschraubten Zustand in ein Verbindungsmittel entlang der Längsachse keinerlei Spiel aufweisen.

Gemäß einer weiteren Ausführungsform der Erfindung weisen die Gewindeverbindungen auf den beiden Endseiten unterschiedliche Gewindesteigungen auf.

Dementsprechend weisen die Gewinde eines Fixiermittels und eines Verbindungsmittels auf einer Endseite der Teleskopstrebe eine unterschiedlich steile Gewindeverbindung als auf der anderen Endseite auf. Durch unterschiedliche Steigungen der Gewindeverbindungen an beiden Enden der Teleskopstrebe kann eine schnelle Auswechselbarkeit des Fixiermittels bei gleichzeitig sehr präziser Einstellung der Länge der Teleskopstrebe erreicht werden. Da möglicherweise mehrere Fixiermittel mit dem Punkt, mit welchem sie verbunden werden sollen, entsprechend ausgewählt werden können, bietet es sich insbesondere an, das häufiger zu wechselnde Fixiermittel mit einem Gewinde mit höherer Steigung auszubilden als das Fixiermittel, welches seltener ausgewechselt wird.

Gemäß einer weiteren Ausführungsform der Erfindung weist zumindest eines der Verbindungsmittel ein Feststellmittel auf, welches im geschlossenen Zustand die Drehung des Innenrohres und des Außenrohres gegenüber den Verbindungsmitteln unterbindet.

Ein solches Feststellmittel kann insbesondere ein Schnellspannverschluss sein, der das Verbindungsmittel entlang eines Schlitzes zusammendrückt, der das Verbindungsmittel zumindest teilweise durchdringt. Durch dieses Aufpressen des Verbindungsmittels mittels des Feststellmittels kann das Fixiermittel nicht mehr im Verbindungsmittel verdreht werden. Alternativ zu einem Schnellspannverschluss können die Verbindungsmittel und das Fixiermittel entlang ihrer Längsachsen Durchgangsbohrungen aufweisen, durch die Bolzen oder Splinte zur Verdrehsicherung hindurchgeführt werden können. Solange der Schnellspannverschluss lose angeordnet und das Verbindungsmittel nicht zusammendrückt ist beziehungsweise der Splint bzw. Bolzen nicht eingeführt ist, kann das Fixiermittel frei gegenüber dem Verbindungsmittels verdreht werden.

Da die Teleskopstrebe während des Einstellens der Länge mittels der Verbindungsmittel üblicherweise bereits zwischen zwei Punkten fixiert ist, ist ein Feststellmittel ausreichend, da somit bereit das Außenrohr bzw. Innenrohr zwischen den beiden Befestigungspunkten nicht mehr verdreht werden kann. Es ist jedoch vorteilhaft, an beiden Verbindungsmitteln ein Feststellmittel anzuordnen, da dieses das Spiel zwischen Fixiermittel und Verbindungsmittel weiter reduziert, so dass unerwünschte Vibrationen bei der Bearbeitung des Bauteils vermieden werden können.

Gemäß einer weiteren Ausführungsform der Erfindung weist das Außenrohr eine Spannvorrichtung auf, mittels der das Außenrohr auf das Innenrohr verspannt werden kann, sodass die Verdrehung des Innenrohres gegenüber dem Außenrohr gehemmt wird.

Die Spannvorrichtung kann entweder durch einen Schnellspannverschluss, der das Außenrohr auf das Innenrohr presst, oder einem Bolzen, der das Außenrohr und das Innenrohr entlang einer oder mehrerer Bohrungen durchdringt, gebildet werden. Mittels der Spannvorrichtung wird die Fixierung zwischen Außenrohr und Innenrohr verstärkt und sichergestellt, dass einwirkende Vibrationen die Länge der Teleskopstrebe nicht verändern.

Gemäß einer weiteren Ausführungsform der Erfindung sind die Fixiermittel über ein Gelenk oder eine Achse schwenkbar.

Häufig sind die Anlageflächen, zwischen denen die Teleskopstrebe angeordnet wird, nicht parallel zueinander ausgerichtet, sondern weisen einen Winkel auf. In diesen Fällen ist es vorteilhaft, wenn die Fixiermittel Gelenke oder Lager aufweisen, über welche die Fixiermittel verschwenkt werden können. Gleichfalls können die Fixiermittel auch eine in Längsrichtung der Teleskopstrebe verlaufende Achse aufweisen, so dass diese nahezu kardanisch gelagert sind.

Gemäß einer weiteren Ausführungsform der Erfindung sind die Gelenke oder die Achsen der Fixiermittel spielfrei ausgebildet.

In jedem Fall ist es vorteilhaft, wenn die Achslager bzw. Gelenklager gegenüber den Achsen oder Gelenken spielfrei ausgebildet sind, so dass Vibrationen zu keinen Schäden an der Teleskopstrebe führen. Die spielfreie Ausbildung der Schwenkelemente erschwert zwar das Schwenken, ermöglicht jedoch eine effektive Vibrationsdämpfung und gewährleistet die Langlebigkeit der Teleskopstrebe. Die Spielfreiheit wird beispielsweise dadurch erreicht, dass das Achslager bezüglich seines Innendurchmessers dem Außendurchmesser der Achse entspricht.

Gemäß einer weiteren Ausführungsform der Erfindung ist das Innenrohr oder das Außenrohr aus einem Glasfaser-Karbon-Werkstoff ausgebildet.

Glasfaser- bzw. Glasfaser-Karbon-Rohre weisen eine besonders hohe Steifigkeit auf, so dass die Elastizität der Teleskopstrebe entlang ihrer Längsachse minimiert wird. Alternativ können Metall- oder Kunststoffrohre verwendet werden.

Gemäß einer weiteren Ausführungsform der Erfindung sind die Verbindungsmittel formschlüssig im Außenrohr oder im Innenrohr angeordnet.

Mittels der formschlüssigen Anordnung werden dämpfende Effekte der Teleskopstrebe zwischen den zwei Punkten, an denen sie fixiert ist, vermieden bzw. reduziert.

Gemäß einer weiteren Ausführungsform der Erfindung ist das Innenrohr zumindest abschnittsweise formschlüssig im Außenrohr angeordnet.

Demnach entspricht der Außendurchmesser des Innenrohres dem Innendurchmesser des Außenrohres, so dass die Teleskopstrebe eine besonders hohe Steifigkeit und Biegefestigkeit aufweist.

Gemäß einer weiteren Ausführungsform der Erfindung weisen die Fixiermittel Schraubverbindungen, T-Profile zum Eingriff in T-Nuten, Saugnäpfe, Schlingen, Magnetverbinder, Klebepunkte, U-Profile, Klammern, Zwingen oder Haken auf, mittels denen die Fixiermittel an zwei Punkten fixiert werden können.

Die Teleskopstrebe kann zwischen zwei Punkten eines zu bearbeitenden komplexen Bauteils oder zwischen einem Punkt eines Bauteils und einer Bearbeitungsfläche angeordnet werden. Bearbeitungsflächen weisen häufig sogenannte T-Nuten auf, in denen ein schnelles und einfaches Anordnen mittels T-Profilen möglich ist.

Generell sind unterschiedliche Fixiermittel vorstellbar, die jeweils an den Fixierpunkt angepasst sind. So kommen insbesondere Saugnäpfe, Schlingen, Magnetverbinder, Klebepunkte, U-Profile oder Haken in Frage. Die Fixiermittel können entsprechend auswechselbar sein.

Es wird auch ein Montagehilfssatz angegeben, der eine Teleskopstrebe wie oben beschrieben mit einem ersten Außenrohr oder Innenrohr und mindestens einem weiteren Außenrohr oder Innenrohr umfasst, das eine zum ersten Außenrohr oder Innenrohr unterschiedliche Länge aufweist.

Demnach umfasst der Montagehilfssatz mehrere Außenrohre oder Innenrohre, die sich in ihrer Länge unterscheiden. Ebenfalls können sich die Außenrohre oder Innenrohre im Vorhandensein von Dämpfungsmaterial, im Material des Rohres selbst, der Wandstärke des Rohres und der Biegeelastizität des Rohres unterscheiden. Jedes der Außenrohre oder Innenrohre ist dabei mit einem Verbindungsmittel verdrehsicher verbunden. Somit können auch gleich lange Außenrohre vorhanden sein, die jedoch Verbindungsmittel mit unterschiedlichen Gewindesteigungen aufweisen.

Gemäß einer Ausführungsform des Montagehilfssatzes umfasst dieser eine Auswahl mehrerer Fixiermittel mit unterschiedlichen Fixierflächen.

Die Fixiermittel werden über Gewinde in die Verbindungsmittel eingeschraubt und können dementsprechend ausgewechselt werden. Die Fixiermittel können dabei beispielsweise Schraubendurchführungen, T-Profile, Saugnoppen, U-Profile oder auch flexible Schlaufen zum Verknoten an einem Bauteil aufweisen.

Vorteilhaft ist es, wenn alle Außenrohre Verbindungsmittel mit gleichsinnigem Gewindeschnitt aufweisen und alle Innenrohre Verbindungsmittel mit dem gleichsinnigen, aber gegenläufigen Gewindeschnitt aufweisen, sodass die Verwendung von Innenrohren und Außenrohren mit Verbindungsmitteln mit jeweils gleichsinnig geschnittenen Gewinden ausgeschlossen ist. Linksgewinde und Rechtsgewinde können an den Verbindungsmitteln und Fixiermitteln farblich markiert sein, sodass es zu keinen Verwechslungen kommt. Gleichfalls kann die Steigung von Gewinden beispielsweise mittels einer numerischen Angabe vermerkt sein.

In einer vorteilhaften Ausführungsform weisen die Verbindungsmittel einen in Längsrichtung der Teleskopstrebe verlaufenden zu den Endseiten hin offenen Schlitz auf, über den Verbindungsmittel mittels Feststellmitteln in mehreren Stellungen zusammengepresst werden können.

In einer ersten Stellung ist das Feststellmittel vollständig geöffnet, sodass das Außengewinde eines Fixiermittels nicht mit dem Innengewinde des Verbindungsmittels in Eingriff steht. In dieser ersten Stellung kann das Fixiermittel, ohne ein- oder ausgeschraubt werden zu müssen, in das Verbindungsmittel eingeführt werden oder entnommen werden.

In einer zweiten Stellung ist das Feststellmittel teilweise geschlossen, sodass das Innengewinde des Verstellmittels mit dem Außengewinde des Fixiermittels in Eingriff steht. In dieser Stellung kann die Teleskopstrebe in ihrer Funktion als Spannschloss verwendet werden, da ein Verdrehen des Innen- und Außenrohres gegenüber den Fixiermitteln möglich ist.

In einer dritten Stellung ist das Feststellmittel vollständig geschlossen, sodass das Verstellmittel entlang seines Innengewindes auf das Außengewinde des Fixiermittels gepresst wird. In dieser dritten Stellung kann das Fixiermittel weder eingeschraubt noch ausgeschraubt werden.

Das Innengewinde im Verstellmittel ist so ausgebildet, dass dieses in der zweiten Stellung mit dem Außengewinde des Fixiermittels korrespondiert. In der zweiten Stellung ist das Verstellmittel über den Schlitz folglich so zusammengepresst, dass der Innere Hohlraum, in dem das Innengewinde ausgebildet ist, nahezu zylinderförmig ist. Vorteilhafterweise wird das Innengewinde im Verstellmittel geschnitten, wenn sich das Feststellmittel in der halbgeschlossenen Stellung befindet.

Der Übergang zwischen der vollständig offenen Stellung und der vollständig geschlossenen Stellung kann stufenlos ausgebildet sein. Der Vorteil dieser Ausführungsform liegt im schnelleren Austausch unterschiedlicher Fixiermittel, die nicht ein- oder ausgeschraubt werden müssen.

Nachfolgend werden einige Ausführungsbeispiele anhand der Zeichnung näher erläutert. Es zeigen:
- Figur 1: eine erste Ausführungsform einer Teleskopstrebe in einer perspektivischen Darstellung,
- Figur 2: eine erste Ausführungsform eines Außenrohres in einer perspektivischen Sprengdarstellung,
- Figur 3: eine erste Ausführungsform eines Innenrohres in einer perspektivischen Sprengdarstellung,
- Figur 4: das Ende eines Innenrohres auf der Seite des Innenrohres in einer perspektivischen Detaildarstellung,
- Figur 5: das Ende eines Außenrohres auf der Seite des Außenrohres in einer perspektivischen Detaildarstellung,
- Figur 6: eine weitere Ausführungsform des Innenrohres im Bereich der Endseite des Verbindungsmittels in einer geschnittenen Seitenansicht, und
- Figur 7: eine weitere Ausführungsform des Innenrohres im Bereich des im Außenrohr verlaufenden Endes in einer geschnittenen Seitenansicht.

In den Figuren sind gleiche oder funktional gleich wirkende Elemente mit den gleichen Bezugszeichen versehen.

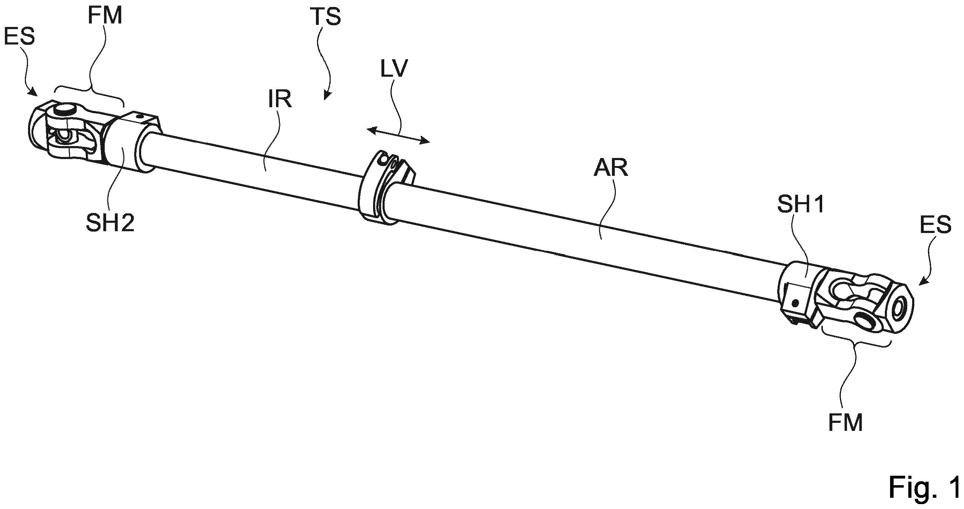

Figur 1 zeigt eine Teleskopstrebe TS, umfassend ein Außenrohr AR, ein im Außenrohr AR entlang der Teleskoprichtung LV längsverschiebbares Innenrohr IR, das mittels eines Spreizdübels im Außenrohr AR fixierbar ist. An den gegenüberliegenden Endseiten ES der Teleskopstrebe TS sind jeweils erste und zweite Verbindungsmittel SH1, SH2 angeordnet, wobei Fixiermittel FM in die Verbindungsmittel SH1, SH2 einschraubbar sind. Die Fixiermittel FM und die Verbindungsmittel SH1, SH2 auf den gegenüberliegenden Endseiten ES der Teleskopstrebe TS weisen umgekehrte Gewindegänge auf, so dass die Länge der Teleskopstrebe TS durch Drehen der Teleskopstrebe TS verändert werden kann. Beim Drehen von Innenrohr IR und Außenrohr AR um die entlang der Längsachse ausgerichtete Drehachse wirken die Gewindeverbindungen zwischen den beiden Verbindungsmittel SH1, SH2 und den Fixiermitteln FM auf den gegenüberliegenden Seiten zusammen wie ein Spannschloss.

Das erste Verbindungsmittel SH1 weist wie das in sie einführbare Fixiermittel FM ein Rechtsgewinde auf, wohingegen das zweite Verbindungsmittel SH2 nebst ihrem korrespondierenden Fixiermittel FM ein Linksgewinde aufweist.

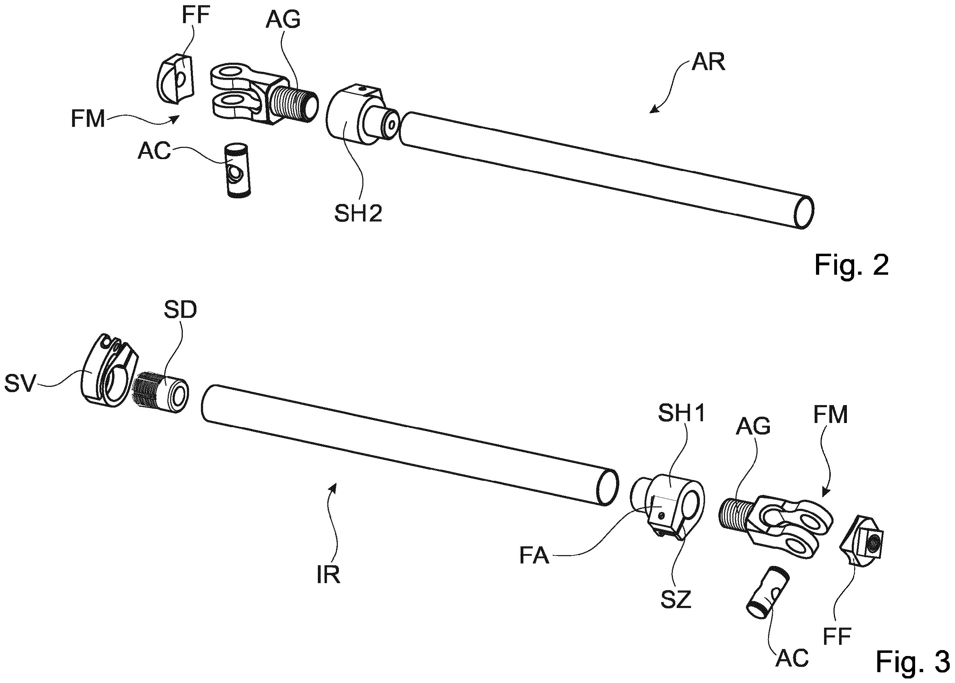

Figur 2 zeigt ein Außenrohr AR mit einem zweiten Verbindungsmittel SH2 und einem Fixiermittel FM in einer Explosionsdarstellung. Das Verbindungsmittel SH2 und das Fixiermittel FM sind über ein Gewindeverbindung verschraubbar. Die Gewindeverbindung in der gezeigten Ausführungsform wird durch ein Außengewinde AG am Fixiermittel und ein Innengewinde im Verbindungsmittel SH2 gebildet. Das Außengewinde AG des Fixiermittels FM weist ein Linksgewinde auf, welches mit dem Linksgewinde des Verbindungsmittels SH2 korrespondiert. Das Verbindungsmittel SH2 wird mit einem Fortsatz formschlüssig in das Außenrohr AR eingefügt. Das Fixiermittel FM weist eine Achse AC auf, über die die Fixierfläche FF schwenkbar gelagert ist. Die Achse AC verläuft dabei durch eine Achsaufnahme, deren lichter Innendurchmesser dem Außendurchmesser der Achse AC entspricht, so dass das Fixiermittel FM spielfrei ausgebildet ist. Die Fixierfläche FF und die Achse AC weisen Schraubendurchführungen auf, durch die das Fixiermittel FM mit einem gewünschten Punkt verschraubt werden kann. Die Fixierfläche FF könnte auch andere Befestigungsmittel wie eine Schlinge, einen Saugnapf, ein T-Profil oder ähnliches aufweisen.

In Figur 3 ist ein Innenrohr IR dargestellt, das bezüglich seiner Außenabmessungen mit dem Außenrohr AR aus Figur 2 korrespondiert. Das erste Verbindungsmittel SH1 und das Fixiermittel FM sind über ein Gewindeverbindung verschraubbar. Die Gewindeverbindung in der gezeigten Ausführungsform wird durch ein Außengewinde AG am Fixiermittel und ein Innengewinde im Verbindungsmittel SH1 gebildet. Das Innenrohr IR weist einen Spreizdübel SD auf, der von einer Stirnseite des Innenrohres IR her eingeführt werden kann. Von der anderen Stirnseite des Innenrohres IR her kann ein Verbindungsmittel SH1 in das Innenrohr IR eingefügt werden. Das Verbindungsmittel SH1 weist ein Feststellmittel FS auf, welches eine senkrecht zur Gewindeachse des Verbindungsmittels SH1 verlaufende Schraubachse aufweist, die durch einen Schlitz SZ führt, der mittels einer Schrauben-Mutterverbindung zusammengepresst werden kann.

Im geöffneten Zustand des Feststellmittels FS kann ein Fixiermittel FM mit einem Außengewinde AG in das Verbindungsmittel SH1 eingeschraubt werden beziehungsweise das Fixiermittel FM ohne, dass es eingeschraubt werden muss eingeführt werden. In einer teilweise geschlossenen Stellung des Feststellmittels FS greift das Gewinde AG des Fixiermittels FM in das Gewinde IG des Verbindungsmittels SH1, SH2 ein. In einer vollständig geschlossenen Stellung ist der Schlitz SZ im Verbindungsmittel SH1, SH2 soweit zusammengedrückt, dass das Verbindungsmittel SH1, SH2 gegenüber dem Fixiermittel FM nicht weiter verdreht werden kann. Das Außengewinde AG des Fixiermittels FM weist, wie auch das Verbindungsmittel SH1, ein Rechtsgewinde auf. Über dem Spreizdübel SD ist eine Spannvorrichtung SV dargestellt, die mit dem Spreizdübel zur Fixierung des Innenrohres im Außenrohr zusammenwirkt, aber üblicherweise mit dem in Figur 2 dargestellten Außenrohr AR verbunden wird. Das In Figur 2 dargestellte Außenrohr kann im Bereich seines des Verbindungsmittels gegenüberliegenden Endes Längsschlitze aufweisen, sodass ein Verspannen mittels der Spannvorrichtung auf dem Innenrohr ermöglicht wird.

Vorteilhafterweise greifen miteinander dauerhaft verbundene Bauteile der Teleskopstrebe TS formschlüssig ineinander ein, so dass die Teleskopstrebe TS weitestgehend spielfrei ausgebildet ist. Die weitere Spielfreiheit wird durch die Spannvorrichtung SV sowie die Feststellmittel FS erreicht.

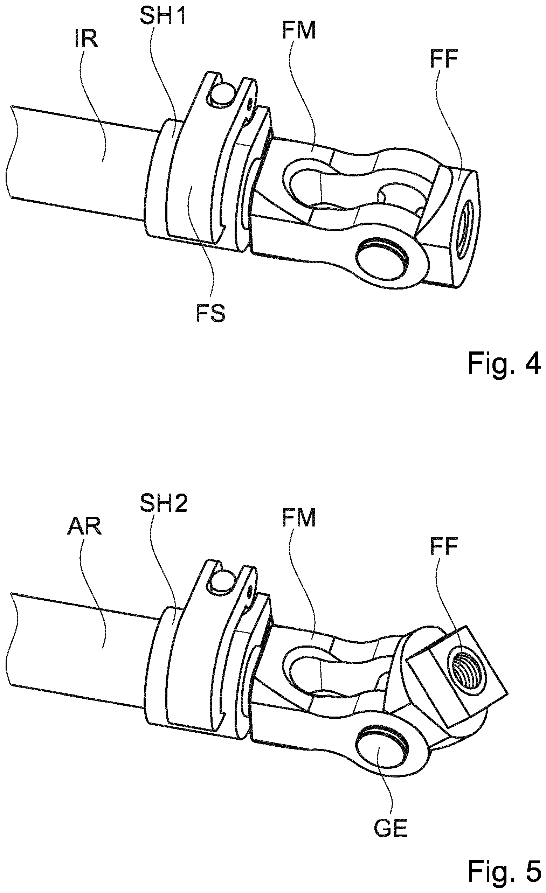

In Figur 4 ist eine Endseite eines Innenrohres IR dargestellt, dessen Verbindungsmittel SH1 mittels eines Feststellmittels FS gegenüber dem Fixiermittel FM verspannt wurde. Das Feststellmittel FS befindet sich im geschlossenen Zustand, so dass das Fixiermittel FM mit seinem in das Verbindungsmittel SH1 ragenden Gewinde nicht verdreht werden kann. Die Fixierfläche FF weist eine Schraubendurchführung auf.

In Figur 5 ist die andere Endseite ES als in Figur 4 dargestellt, wobei das in Figur 5 gezeigte Außenrohr AR zu einem Fixiermittel FM weist, dessen Fixierfläche FF einen Fortsatz zum Eingriff in eine T-Nut aufweist. Die Fixierfläche FF ist über das Gelenk GE abgewinkelt. Der Gelenkbolzen des Gelenks GE führt dabei durch Öffnungen, deren lichter Innendurchmesser dem Außendurchmesser des Gelenkbolzens entsprechen, so dass das Gelenk spielfrei ausgebildet ist.

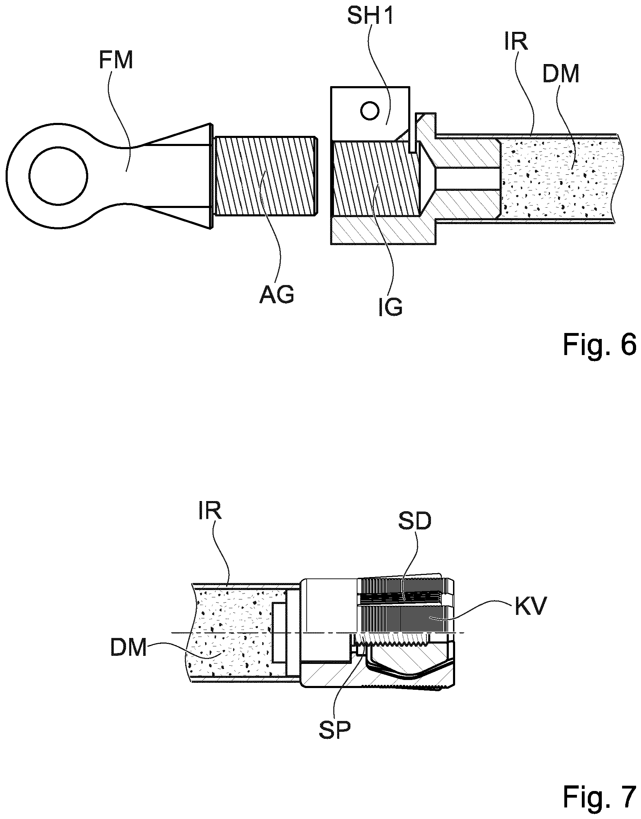

In Figur 6 ist ein Schnitt durch ein Innenrohr IR dargestellt, welches vollständig mit einem schwingungsdämpfenden Material DM befüllt wurde. Das stirnseitig eingefügte Verbindungsmittel SH1 ist ebenfalls im Innenrohr IR formschlüssig einbetoniert. Das Verbindungsmittel SH1 weist ein mit dem Außengewinde AG des Fixiermittels FM korrespondierendes Rechtsgewinde auf.

In Figur 7 wird das zum Außenrohr AR weisende Ende des Innenrohres IR dargestellt, welches einen Spreizdübel SD aufweist, der mittels eines Spreizers SP, der stirnseitig im Innenrohr IR befestigt wurde, gespreizt werden kann. Beim Einschrauben des Spreizers SP werden Klemmvorrichtungen KV gegen die Innenfläche des Außenrohres gepresst.

## Patentansprüche

1. Teleskopstrebe (TS) umfassend ein Außenrohr (AR) und ein in das Außenrohr (AR) eingeführtes und relativ zum Außenrohr (AR) längsverschiebbares Innenrohr (IR), das an einem Ende mittels eines Spreizdübels (SD) im Außenrohr (AR) verriegelbar ist, wobei an gegenüberliegenden Endseiten (ES) der Teleskopstrebe (TS) jeweils ein Verbindungsmittel (SH1, SH2) und jeweils ein Fixiermittel (FM) angeordnet ist, wobei die Fixiermittel (FM) mit den Verbindungsmitteln (SH1, SH2) an Gewindeverbindungen (IG, AG) miteinander verschraubbar sind, und wobei die Gewindeverbindungen (IG, AG) zwischen den Verbindungsmitteln (SH1, SH2) und den Fixiermitteln (FM) auf den gegenüberliegenden Endseiten (ES) der Teleskopstrebe (TS) gegenläufige Gewindegänge aufweisen, so dass die Verbindungsmittel (SH1, SH2) und die Fixiermittel (FM) beim Drehen des mit dem Außenrohr (AR) verriegelten Innenrohres (IR) um eine Drehachse der Teleskopstrebe (TS) wie ein Spannschloss zusammenwirken, wobei die Verbindungsmittel (SH1, SH2) an der Endseite des Außenrohr (AR) und an der Endseite des Innenrohrs (IR) vorgesehen sind.

2. Teleskopstrebe nach Anspruch 1, bei der das Innenrohr (IR) zumindest abschnittsweise mit einem schwingungsdämpfenden Material (DM) gefüllt ist.

3. Teleskopstrebe nach Anspruch 1 oder 2 bei der das Außenrohr (AR) abschnittsweise mit einem schwingungsdämpfenden Material (DM) gefüllt ist.

4. Teleskopstrebe nach einem der Ansprüche 1 bis 3, bei der die Gewindeverbindungen (IG, AG) als Feingewinde ausgebildet sind.

5. Teleskopstrebe nach einem der Ansprüche 1 bis 4, bei der die Gewindeverbindungen (IG, AG) auf den beiden Endseiten (ES) unterschiedliche Gewindesteigungen aufweisen.

6. Teleskopstrebe nach einem der Ansprüche 1 bis 5, bei der zumindest eines der Verbindungsmittel (SH1, SH2) ein Feststellmittel (FS) aufweist, welches im geschlossenen Zustand die Drehung des Innenrohres (IR) und des Außenrohres (AR) gegenüber den Verbindungsmitteln (SH1, SH2) unterbindet.

7. Teleskopstrebe nach einem der Ansprüche 1 bis 6, bei der das Außenrohr (AR) eine Spannvorrichtung (SV) aufweist, mittels der das Außenrohr (AR) auf das Innenrohr (IR) verspannt werden kann, sodass die Verdrehung des Innenrohres (IR) gegenüber dem Außenrohr (AR) gehemmt wird.

8. Teleskopstrebe nach einem der Ansprüche 1 bis 7, bei der die Fixiermittel (FM) über ein Gelenk (GE) oder eine Achse (AC) schwenkbar sind.

9. Teleskopstrebe nach Anspruch 8, bei der die Gelenke (GE) oder die Achsen (AC) der Fixiermittel (FM) spielfrei ausgebildet ist.

10. Teleskopstrebe nach einem der Ansprüche 1 bis 9, bei der das Innenrohr (IR) oder das Außenrohr (AR) aus einem Glasfaser-Carbon-Werkstoff ausgebildet ist.

11. Teleskopstrebe nach einem der Ansprüche 1 bis 10, bei der die Verbindungsmittel (SH1, SH2) formschlüssig in den gegenüberliegenden Endseiten (ES) der Rohre (AR, IR) angeordnet sind.

12. Teleskopstrebe nach einem der Ansprüche 1 bis 11, bei der das Innenrohr (IR) zumindest abschnittsweise formschlüssig im Außenrohr (AR) angeordnet ist.

13. Teleskopstrebe nach einem der Ansprüche 1 bis 12, bei der die Fixiermittel (FM) Schraubverbindungen (SR), T-Profile (TP) zum Eingriff in T-Nuten, Saugnäpfe, Schlingen, Magnetverbinder, Klebepunkte, U-Profile, Klammern, Zwingen oder Haken aufweisen, mittels denen die Fixiermittel (FM) an zwei Punkten fixiert werden können.

14. Montagehilfssatz umfassend eine Teleskopstrebe (TS) nach einem der Ansprüche 1 bis 13 mit einem ersten Außenrohr (AR1) oder Innenrohr (IR) und mindestens einem weiteren Außenrohr (AR2) oder Innenrohr (IR), das eine zum ersten Außenrohr (AR1) oder Innenrohr (IR) unterschiedliche Länge aufweist.

15. Montagehilfssatz nach Anspruch 14, umfassend eine Auswahl mehrerer Fixiermittel (FM).

## Claims

1. Telescopic strut (TS) comprising an outer tube (AR) and an inner tube (IR) which is introduced into the outer tube (AR) and is longitudinally movable relative to the outer tube (AR), and which can be locked at one end in the outer tube (AR) by means of an expansion dowel (SD), wherein a connection means (SH1, SH2) and a fixing means (FM) are arranged on opposite ends (ES) of the telescopic strut (TS) in each case, wherein the fixing means (FM) can be screwed together with the connection means (SH1, SH2) at threaded connections (IG, AG), and wherein the threaded connections (IG, AG) between the connection means (SH1, SH2) and the fixing means (FM) have opposing thread turns on the opposite ends (ES) of the telescopic strut (TS), so that the connection means (SH1, SH2) and the fixing means (FM) interact in the manner of a turnbuckle when the inner tube (IR) locked to the outer tube (AR) is rotated about an axis of rotation of the telescopic strut (TS), wherein the connection means (SH1, SH2) are provided on the end of the outer tube (AR) and on the end of the inner tube (IR).

2. Telescopic strut according to claim 1, wherein the inner tube (IR) is filled at least in portions with a vibration-damping material (DM).

3. Telescopic strut according to either claim 1 or claim 2, wherein the outer tube (AR) is filled in portions with a vibration-damping material (DM).

4. Telescopic strut according to any of claims 1 to 3, wherein the threaded connections (IG, AG) are designed as fine-pitch threads.

5. Telescopic strut according to any of claims 1 to 4, wherein the threaded connections (IG, AG) have different thread pitches on the two ends (ES).

6. Telescopic strut according to any of claims 1 to 5, wherein at least one of the connection means (SH1, SH2) comprises a securing means (FS) which, in the closed state, prevents rotation of the inner tube (IR) and the outer tube (AR) relative to the connection means (SH1, SH2).

7. Telescopic strut according to any of claims 1 to 6, wherein the outer tube (AR) has a clamping device (SV) by means of which the outer tube (AR) can be clamped on the inner tube (IR) so that rotation of the inner tube (IR) relative to the outer tube (AR) is inhibited.

8. Telescopic strut according to any of claims 1 to 7, wherein the fixing means (FM) can be pivoted via a joint (GE) or a shaft (AC).

9. Telescopic strut according to claim 8, wherein the joints (GE) or the shafts (AC) of the fixing means (FM) are free from play.

10. Telescopic strut according to any of claims 1 to 9, wherein the inner tube (IR) or the outer tube (AR) is made of a glass fiber carbon material.

11. Telescopic strut according to any of claims 1 to 10, wherein the connection means (SH1, SH2) are arranged in a form-fitting manner in the opposite ends (ES) of the tubes (AR, IR).

12. Telescopic strut according to any of claims 1 to 11, wherein the inner tube (IR) is arranged in the outer tube (AR) in a form-fitting manner at least in portions.

13. Telescopic strut according to any of claims 1 to 12, wherein the fixing means (FM) have screw connections (SR), T-profiles (TP) for engaging in T-slots, suction cups, loops, magnetic connectors, adhesive points, U-profiles, clamps or hooks, by means of which the fixing means (FM) can be fixed at two points.

14. Assembly aid comprising a telescopic strut (TS) according to any of claims 1 to 13, having a first outer tube (AR1) or inner tube (IR) and at least one further outer tube (AR2) or inner tube (IR) which has a different length to the first outer tube (AR1) or inner tube (IR).

15. Assembly aid according to claim 14, comprising a selection of a plurality of fixing means (FM).

## Revendications

1. Entretoise télescopique (TS) comprenant un tube extérieur (AR) et un tube intérieur (IR) introduit dans le tube extérieur (AR) et déplaçable longitudinalement par rapport au tube extérieur (AR), lequel peut être verrouillé à une extrémité dans le tube extérieur (AR) au moyen d'une cheville à expansion (SD), un moyen de connexion (SH1, SH2) et un moyen de fixation (FM) étant respectivement disposés à des extrémités (ES) opposées de l'entretoise télescopique (TS), les moyens de fixation (FM) pouvant être vissés ensemble avec les moyens de connexion (SH1, SH2) sur des liaisons filetées (IG, AG), et les liaisons filetées (IG, AG) entre les moyens de connexion (SH1, SH2) et les moyens de fixation (FM) sur les extrémités (ES) opposées de l'entretoise télescopique (TS) présentant des filetages opposés, de telle sorte que les moyens de connexion (SH1, SH2) et les moyens de fixation (FM) interagissent comme un tendeur lors de la rotation du tube intérieur (IR) verrouillé avec le tube extérieur (AR) autour d'un axe de rotation de l'entretoise télescopique (TS), les moyens de connexion (SH1, SH2) étant prévus sur l'extrémité du tube extérieur (AR) et sur l'extrémité du tube intérieur (IR).

2. Entretoise télescopique selon la revendication 1, dans laquelle le tube intérieur (IR) est au moins partiellement rempli d'un matériau amortisseur de vibrations (DM).

3. Entretoise télescopique selon la revendication 1 ou 2, dans laquelle le tube extérieur (AR) est au moins partiellement rempli d'un matériau amortisseur de vibrations (DM).

4. Entretoise télescopique selon l'une des revendications 1 à 3, dans laquelle les liaisons filetées (IG, AG) sont réalisées en tant que filetage fin.

5. Entretoise télescopique selon l'une des revendications 1 à 4, dans laquelle les liaisons filetées (IG, AG) présentent des pas de filetage différents aux deux extrémités (ES).

6. Entretoise télescopique selon l'une des revendications 1 à 5, dans laquelle au moins un moyen de connexion (SH1, SH2) présente un moyen de serrage (FS), lequel empêche, à l'état fermé, la rotation du tube intérieur (IR) et du tube extérieur (AR) par rapport aux moyens de connexion (SH1, SH2).

7. Entretoise télescopique selon l'une des revendications 1 à 6, dans laquelle le tube extérieur (AR) présente un dispositif de tension (SV), au moyen duquel le tube extérieur (AR) peut être tendu sur le tube intérieur (IR), de telle façon que la rotation du tube intérieur (IR) par rapport au tube extérieur (AR) est inhibée.

8. Entretoise télescopique selon l'une des revendications 1 à 7, dans laquelle les moyens de fixation (FM) peuvent être pivotés au moyen d'une articulation (GE) ou d'un axe (AC).

9. Entretoise télescopique selon la revendication 8, dans laquelle les articulations (GE) ou les axes (AC) des moyens de fixation (FM) sont réalisés sans jeu.

10. Entretoise télescopique selon l'une des revendications 1 à 9, dans laquelle le tube intérieur (IR) ou le tube extérieur (AR) est réalisé à partir d'un matériau en carbone et fibre de verre.

11. Entretoise télescopique selon l'une des revendications 1 à 10, dans laquelle les moyens de connexion (SH1, SH2) sont disposés par complémentarité de forme dans les extrémités (ES) opposées des tubes (AR, IR).

12. Entretoise télescopique selon l'une des revendications 1 à 11, dans laquelle le tube intérieur (IR) est disposé au moins par sections en complémentarité de forme dans le tube extérieur (AR).

13. Entretoise télescopique selon l'une des revendications 1 à 12, dans laquelle les moyens de fixation (FM) présentent des raccords vissés (RS), des profilés en T (TP) pour l'entrée en prise dans des rainures en T, des ventouses, des boucles, des raccords magnétiques, des points de collage, des profilés en U, des pinces, des serre-joints ou des crochets, au moyen desquels les moyens de fixation (FM) peuvent être fixés sur deux points.

14. Jeu d'aide au montage comprenant une entretoise télescopique (TS) selon l'une des revendications 1 à 13, comprenant un premier tube extérieur (AR1) ou tube intérieur (IR) et au moins un autre tube extérieur (AR2) ou tube intérieur (IR), qui présente une longueur différente de celle du premier tube extérieur (AR1) ou tube intérieur (IR).

15. Jeu d'aide au montage selon la revendication 14, comprenant une sélection de plusieurs moyens de fixation (FM).
